# EUROPÄISCHE PATENTSCHRIFT

(11) **EP 0 454 657 B1**
(45) Veröffentlichungstag und Bekanntmachung des Hinweises auf die Patenterteilung: **29.09.1993**
(21) Anmeldenummer: 91890063.0
(22) Anmeldetag: 02.04.1991
(51) Int. Cl.: B60C 11/01

(54) **Fahrzeugluftreifen**
Vehicle pneumatic tyre
Bandage pneumatique pour véhicules

(30) Priorität: 25.04.1990 AT 952/90
(43) Veröffentlichungstag der Anmeldung: 30.10.1991
(73) Patentinhaber: Semperit Reifen Aktiengesellschaft, A-2514 Traiskirchen (AT)
(72) Erfinder: Stumpf, Horst, Dipl.-Ing., A-2551 Enzesfeld (AT); Wohlfahrt, Raimund, A-2551 Enzesfeld (AT)
(74) Vertreter: Vinazzer, Edith

(56) Entgegenhaltungen:
- EP-A- 0 064 934
- US-A- 4 356 985
- PATENT ABSTRACTS OF JAPAN vol. 11, no. 25 (M-556)(2472) 23. Januar 1987& JP-A-61 196 807 (BRIDGESTONE CORP. ) 1. September 1986
- PATENT ABSTRACTS OF JAPAN vol. 10, no. 191 (M-495)(2247) 4. Juli 1986
- & JP-A-61 036 002 (BRIDGESTONE CORP. ) 20. Februar 1986

## Beschreibung

Die Erfindung betrifft einen Fahrzeugluftreifen mit einem Laufflächenprofil, welches durch in Umfangsrichtung verlaufende Umfangsnuten und durch Quernuten in Profilelemente gegliedert ist, wobei in den Laufflächenseitenbereichen je eine Schulterumfangsnut mit je einer seitlich anschließenden Schulterblockreihe mit zum Laufflächenrand zu sich aufweitenden Quernuten vorgesehen ist, wobei insbesondere die Quernuten innerhalb der Schulterblockreihen zumindest eine Querschnittsverengung aufweisen und wobei sich der Quernutquerschnitt etwa ab der Schulterumfangsnut bis zur Stelle der kleinsten Querschnittsfläche kontinuierlich verengt.

Ein derartiger Fahrzeugreifen ist aus dem Stand der Technik gemäß dem Patent Abstract of Japan, Vol. 11, Nr. 25 (M-556) (2472), 23.1.1987, JP-A 61.196 807 (Bridgestone Corporation) bekannt. Die Querschnittsverengungen der Quernuten dienen zur Reduzierung des Abrollgeräusches und sind als sehr enge Einschnürungen gestaltet.

Es ist ferner bekannt, daß Aquaplaning von verschiedenen Faktoren, und zwar im wesentlichen von der Fahrgeschwindigkeit, von der Wassertiefe, von den Reifenabmessungen und von der Laufflächenprofilgestaltung abhängig ist bzw. durch diese Faktoren beeinflußt wird. Durch die Mustergestaltung bei modernen Hochgeschwindigkeitsreifen ist es gelungen, Aquaplanging zu immer höheren Geschwindigkeiten zu verschieben. Zwei Maßnahmen bei der Gestaltung von Laufflächenprofilen sind hier insbesondere zu nennen, und zwar, gerade verlaufende Umfangsnuten und Quernuten, die sich zu den Schulterblockbereichen zu kontinuierlich erweitern. Dabei müssen jedoch auch die anderen Reifeneigenschaften, wie etwa das Fahrverhalten, im Auge behalten werden, was es erforderlich macht, etwa von der Halbmitte des Laufflächenprofiles an auf breite Umfangsnuten zu verzichten. Aus diesem Grund können auch die Quernuten nicht beliebig breit gestaltet werden, und es ist auch der Abstand benachbarter Quernuten nicht beliebig verringerbar. Insbesondere bei Hochgeschwindigkeitsreifen kann auf möglichst stabile Schulterblöcke nicht verzichtet werden, so daß bei diesen Reifen Aquaplaning im allgemeinen in den Seitenbereichen des Laufflächenprofiles beginnt.

Hier setzt nun die Erfindung ein, deren Aufgabe darin besteht, durch weitere gestalterische Maßnahmen am Laufflächenprofil eines Fahrzeugluftreifens das Aquaplaningverhalten zu verbessern, ohne die erforderliche Stabilität der Schulterblöcke zu verringern.

Gelöst wird die gestellte Aufgabe erfindungsgemäß dadurch, daß die kleinste Querschnittsfläche mindestens 0,5 Q_{A} und höchstens 0,95 Q_{A} beträgt, wobei Q_{A} die Querschnittsfläche der Quernut im Einmündungsbereich zur Schulterumfangsnut ist.

Durch die erfidnungsgemäße Maßnahme wird die über die Quernuten abtransportierbare Wassermenge erhöht. Dieser Effekt ist darauf zurückzuführen, daß das in den Umfangsnuten und den Quernuten während des Abrollens des Reifens auf nassem Untergrund vorliegende Luft-Wasser-Gemisch komprimierbar ist und eine Ausnützung des Düseneffektes gestattet.

Eine merkbare Verbesserung des Wasserabflußvermögens wird vor allem dadurch erzielt, daß die kleinste Querschnittsfläche mindestens 0,5 Q_{A} und höchstens 0,95 Q_{A} beträgt, wobei Q_{A} die Querschnittsfläche der Quernut im Einmündungsbereich zur Schulterumfangsnut ist.

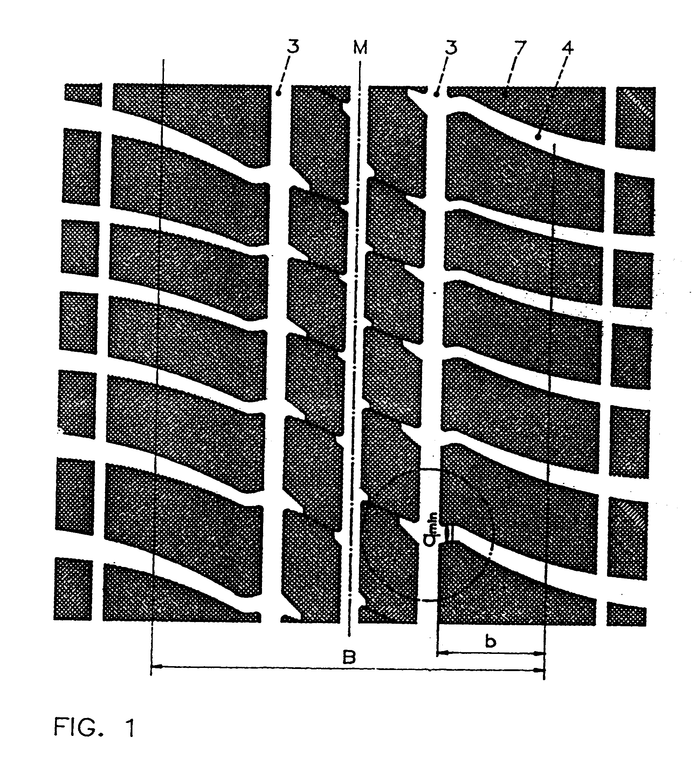

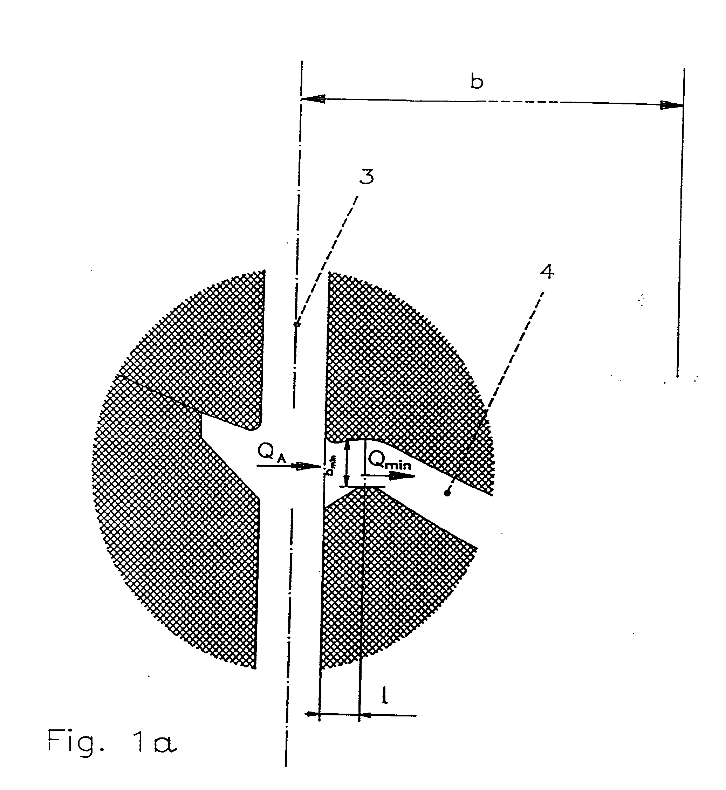

Weitere Merkmale, Vorteile und Einzelheiten der Erfindung werden nun anhand der Zeichnung, die ein Ausführungsbeispiel darstellt, näher beschrieben. Hiebei ist in Fig. 1 eine Teilabwicklung auf eine Hälfte eines Laufflächenprofiles eines Fahrzeugreifens dargestellt, Fig. 1a zeigt eine Detailansicht aus Fig. 1 in vergrößertem Maßstab.

Wie aus Fig. 1 ersichtlich ist, setzt sich das Laufflächenprofil im wesentlichen aus in Umfangsrichtung verlaufenden Umfangsnuten 2, 3, diese zumindest teilweise kreuzenden Quernuten 4 und aus Profilelementen, und zwar aus Laufflächenbändern und/oder Blockreihen, zusammen. Das Laufflächenprofil des vorliegenden Ausführungsbeispieles weist eine entlang der Mittelumfangslinie M-M verlaufende Mittelumfangsnut 2, je ein an diese anschließendes Laufflächenband 5, welches durch je eine Schulterumfangsnut 3 von je einer Schulterblockreihe 7 getrennt ist. Die Breite der Lauffläche in der Bodenaufstandsfläche des Reifens ist mit B bezeichnet.

Jede Schulterblockreihe 7 weist eine Breite b auf, die mindestens 20 % der Laufflächenbreite B, insbesondere zwischen 25 und 30 % der Laufflächenbreite B, beträgt. Damit ist gewährleistet, daß, zusammen mit den gewählten Abständen benachbarter Quernuten 4, ausreichend stabile Schulterblöcke 7a gebildet sind.

Um das Wasserabfuhrvermögen in den Schulterbereichen zu erhöhen, sind die Quernuten 4 im Bereich der Schulterblockreihen 7 zumindest teilweise so gestaltet, daß sie sich zum Laufflächenrand zu trompetenförmig aufweiten.

Nach der Erfindung ist nun der Quernutverlauf zwischen den Einzelblöcken 7a besonders gestaltet. Wie insbesondere aus Fig. 1a ersichtlich ist, weisen die Quernuten 4, beginnend bei der Schulterumfangsnut 3, einen Bereich auf, in dem eine kontinuierliche Verringerung des Nutquerschnittes bis zu einer Stelle Qₘᵢₙ mit der kleinsten Querschnittsfläche erfolgt. Anschließend sind die Quernuten 4, wie bereits beschrieben, zum Laufflächenrand zu trompetenförmig aufgeweitet. Die Querschnittsfläche Qₘᵢₙ beträgt mindestens O,5 und höchstens O,95 Q_{A}, wobei Q_{A} die Querschnittsfläche der Quernut 4 an der Kante zur Umfangsnut 3 ist. Die Stelle mit dem geringsten Nutquerschnitt Qₘᵢₙ befindet sich in einem Abstand 1 von der Umfangsnut 3, der zumindest 0,1 b, höchstens 0,6 b beträgt. Wie in den Zeichnungsfiguren dargestellt, wird hiebei die Anordnung so getroffen, daß sich im Quernutverlauf an der Stelle mit dem kleinsten Querschnitt ein Quernutknick befindet. Bevorzugt wird weiters die Querschnittsverengung konstruktiv dadurch bewirkt, daß sie Quernutseitenwände über dem Bereich 1, in Draufsicht betrachtet, kontinuierlich zusammenlaufen.

Abweichend von der dargestellten Ausführungsform ist es möglich, an die dargestellte Quernutverengung mit anschließender Aufweitung nochmals eine Querschnittsverengung folgen zu lassen, um den Düseneffekt zweifach auszunützen. Es ist ferner möglich, auf gesonderte Knicke im Quernutverlauf zu verzichten und somit einen zumindest im wesentlichen kontinuierlichen Verlauf zu wählen. Prinzipiell ist es auch denkbar, die Querschnittsverringerung durch andere konstruktive Maßnahmen, beispielsweise Änderung der Neigung der Quernutseitenwände, zu bewerkstelligen.

## Patentansprüche

1. Fahrzeugluftreifen mit einem Laufflächenprofil, welches durch in Umfangsrichtung verlaufende Umfangsnuten (3) und durch Quernuten (4) in Profilelemente gegliedert ist, wobei in den Laufflächenseitenbereichen je eine Schulterumfangsnut (3) mit je einer seitlich anschließenden Schulterblockreihe (7) mit zum Laufflächenrand zu sich aufweitenden Quernuten vorgesehen ist, wobei insbesondere die Quernuten (4) innerhalb der Schulterblockreihen (7) zumindest eine Querschnittsverengung aufweisen und wobei sich der Quernutquerschnitt etwa ab der Schulterumfangsnut (3) bis zur Stelle der kleinsten Querschnittsfläche (Qₘᵢₙ) kontinuierlich verengt, dadurch gekennzeichnet, daß die kleinste Querschnittsfläche (Qₘᵢₙ) mindestens 0,5 Q_{A} und höchstens 0,95 Q_{A} beträgt, wobei Q_{A} die Querschnittsfläche der Quernut (4) im Einmündungsbereich zur Schulterumfangsnut (3) ist.

2. Fahrzeugluftreifen nach Anspruch 1, dadurch gekennzeichnet, daß sich die Stelle mit der kleinsten Querschnittsfläche (Qₘᵢₙ ) in einem Abstand (l) von der Schulterumfangsnut (3) befindet, der mindestens 0,1 b und höchstens 0,6 b beträgt, wobei b die Breite der Schulterblockreihe bis zum Rand der Bodenaufstandsfläche des Reifens gemessen ist.

## Claims

1. Pneumatic vehicle tyre, having a tread surface profile which is divided into profile elements by means of circumferential grooves (3), which extend in the circumferential direction, and by means of transverse grooves (4), wherein each shoulder circumferential groove (3) is provided, in the lateral regions of the tread surface, with a respective laterally communicating row of shoulder blocks (7) having transverse grooves widening-out towards the edge of the tread surface, wherein more especially the transverse grooves (4) have at least one portion of reduced cross-section internally of the rows of shoulder blocks (7), and wherein the cross-section of the transverse groove narrows continuously from substantially the shoulder circumferential groove (3) to the location of smallest cross-sectional area (Qₘᵢₙ), characterised in that the smallest cross-sectional area (Qₘᵢₙ) amounts to at least 0.5 Q_{A}and at most 0.95 Q_{A}, Q_{A} being the cross-sectional area of the transverse groove (4) in the transitional region leading to the shoulder circumferential groove (3).

2. Pneumatic vehicle tyre according to claim 1, characterised in that the location having the smallest cross-sectional area (Qₘᵢₙ) is spaced from the shoulder circumferential groove (3) at a distance (1), which amounts to at least 0.1 b and at most 0.6 b, b being the width measured between the row of shoulder blocks and the edge of the ground supporting area of the tyre.

## Revendications

1. Pneumatique pour véhicule comportant un profil de surface de roulement qui est divisé en éléments de sculpture par des gorges périphériques (3) s'étendant dans la direction périphérique et par des gorges transversales (4), ce en quoi il est prévu dans les zones latérales de la surface de roulement respectivement une gorge périphérique d'épaulement (3) avec respectivement une ligne d'épaulement pleine (7) s'y raccordant latéralement, avec des gorges transversales s'élargissant en direction du bord de la surface de roulement, ce en quoi notamment les gorges transversales (4) à l'intérieur des lignes d'épaulement pleines (7) présentent au moins un rétrécissement de section transversale et moyennant quoi la section transversale de la gorge transversale se rétrécit continuellement à partir de la gorge périphérique d'épaulement (3) jusqu'à l'emplacement de la plus petite surface de section transversale (Qₘᵢₙ), caractérisé en ce que la plus petite surface de section transversale (Qₘᵢₙ) est d'au moins 0,5 Q_{A} et d'au plus 0,95 Q_{A}, ce en quoi la surface de section transversale de la gorge transversale (4) est une zone d'embouchure pour la gorge périphérique d'épaulement (3).

2. Pneumatique pour véhicule selon la revendication 1, caractérisé en ce que l'emplacement de la plus petite surface de section transversale (Qₘᵢₙ) se trouve à une distance (ℓ) par rapport à la gorge périphérique d'épaulement (3) qui est d'au moins 0,1 b et d'au plus 0,6 b, moyennant quoi la largeur b de la ligne d'épaulement pleine est mesurée jusqu'au bord de la surface de contact au sol du pneumatique.
